# EUROPEAN PATENT SPECIFICATION

(11) **EP 1 751 031 B1**
(45) Date of publication and mention of the grant of the patent: **21.07.2010**
(21) Application number: 05777415.0
(22) Date of filing: 05.05.2005
(51) Int. Cl.: B65D 81/34, A21D 8/06, A21D 15/00, A21D 15/02

(54) **METHOD FOR PRODUCING PACKAGED FROZEN BREAD PRODUCTS AND PACKAGING THEREFOR**
VERFAHREN ZUR HERSTELLUNG VON VERPACKTEN GEFRORENEN BROTPRODUKTEN UND VERPACKUNG DAFÜR
PROCEDE DE PRODUCTION DE PAIN OU DE PRODUITS CUITS AU FOUR SIMILAIRES

(30) Priority: 12.05.2004 IT MI20040957
(43) Date of publication of application: 14.02.2007
(73) Proprietor: Rossin, Angelo Pietro, I-27029 Vigevano PV (IT)
(72) Inventor: Rossin, Angelo Pietro, I-27029 Vigevano PV (IT)
(74) Representative: Pesce, Michele
(86) International application number: PCT/IB2005/053038
(87) International publication number: WO 2005/107478

(56) References cited:
- EP-A- 1 033 324
- FR-A- 2 205 042
- GB-A- 2 379 646
- NL-C2- 1 023 261
- US-A- 5 069 921
- RAVIZET J.: "La surgélation" REVUE PRATIQUE DU FROID ET DU CONDITIONNEMENT DE L'AIR, vol. 39, no. 588, 1984, pages 24-34, XP002349090
- UNBEHEND G., NEUMANN H.: "Production of prebaked, deep frozen wheat rolls to finish at home" GETREIDE, MEHL UND BROT, vol. 54, no. 2, 2000, pages 110-120, XP008042036

## Description

The present invention relates to a method for producing bread portions having weight between 20 and 200 grams and an arrangement of a packaging and of bread contained therein, in accordance with the accompanying claims.

It is known to bake bread, deep-freeze it and market it deep-frozen. The deep-frozen bread is generally marketed in containers from which it is extracted to heat it in an oven before being eaten or sold. The bread obtained in this manner does not always present characteristics of freshness and satisfactory taste for the consumer. Moreover the operations required to transfer the deep-frozen bread from the containers in which it is usually marketed to the oven are sometimes difficult or at least not easy. The documents NL1023261 teaches to provide pre-baked rolls such as "puntjes" and "bolletjes", sweet rolls and raisins rolls; it teaches to freeze them and later baking them off in a packing permeable to gases but impermeable to steam, so as to obtain easily soft rolls in a few minutes, with no need of specific skills or professional equipment. That is, this document discloses a process for producing sweet soft rolls through a stem baking off.

An object of the present invention is to provide a method for producing bread which overcomes the aforestated drawbacks and, in particular, enables bread to be produced with optimal freshness and taste qualities, and which simplifies and facilitates the final bread baking stage.

This and further objects which will be apparent to an expert of the art are attained by a method, and an arrangement according to the accompanying claims.

A particular embodiment of the invention is described hereinafter by way of non-limiting example.

The method for producing bread according to the invention comprises a usual first stage in which the bread mix is prepared, a usual second stage of splitting the mix and dividing it into parts, and a conventional stage of leavening said parts. Preferably the leavening process is completely natural. According to the invention, the leavened parts of the mix are then subjected to a pre-baking stage, then a stage of cooling said pre-baked parts, then a stage of deep-freezing said cooled parts, and finally a stage of packaging predefined quantities of said deep-frozen parts in a plastic container which is heat resistant and at least partially permeable to gases. In this manner the purchaser of the pre-baked and deep-frozen bread can then effect final baking of the product by placing the container containing the various pieces of deep-frozen and pre-baked bread into the oven without having to extract them from the container. As the pre-baked and deep-frozen bread is distributed to the final bread producers packaged in plastic containers, the operations involved in loading and unloading the oven are simplified and accelerated. Moreover, as the plastic containers can act as the sole packaging for distributing the pre-baked and deep-frozen bread, this can have beneficial effects both on packaging and distribution costs and on the quantity of material required to form said packages.

It should also be noted that the final bread baking stage is preferably carried out in a place different and separate from that in which the mixing, splitting, leavening, pre-baking, deep-freezing and packaging stages are carried out. In other words, the pre-baked, deep-frozen and packaged bread is generally produced and sold as an intermediate product for production of bread, this however being effectively produced by the purchaser of the pre-baked, deep-frozen and packaged bread, by effecting final baking of the deep-frozen bread in the container itself.

According to the invention, the predefined quantities of packaged deep-frozen parts are inserted into containers in the form of a bag, i.e. into a usual flexible container of substantially tubular form closed at its bottom and at its top. This container is constructed of a plastic material at least partially permeable to gases and presents a plurality of small-dimension holes to enable the steam to escape during final bread baking.

The pre-baking stage comprises baking to the extent of between about 70% and 90% of the total baking necessary for producing the bread, conducted at a temperature between 100°C and 250°C, for a time between 10 and 40 minutes. Preferably, pieces of mix between 30 and 150 grams are pre-baked at 195°C for 15 minutes, to achieve baking to the extent of about 80/85% of total bread baking.

It should be noted that in the present context, pre-baking means bread baking of the type indicated in the preceding two paragraphs.

Preferably after pre-baking, the cooling stage takes place at ambient temperature, in order to accompany the product to the subsequent deep-freezing stage without it undergoing violent thermal shocks which could compromise bread quality.

Deep-freezing is of the rapid forced type and takes place by maintaining the pre-baked and cooled dough parts at a temperature less than or equal to - 35°C for a time greater than or equal to 10 minutes. Deep-freezing preferably takes place at -40°C for 15 minutes.

Preferably the pre-baked and deep-frozen bread is not subjected to stabilizing treatments to accelerate or delay its development.

Advantageously, prior to the deep-freezing stage a plurality of dough parts are disposed on a tray, the trays are then loaded onto a tray-carrying trolley, said trolleys being pushed into a deep-freezing cell for the deep-freezing stage. The tray-carrying trolleys are made to enter the deep-freezing cell through a first opening and made to leave through a second opening to enable the trolleys to be inserted into said cell in series, to accelerate and rationalize the deep-freezing stage.

The containers with the pre-baked and deep-frozen bread are stored at a temperature less than or equal to -20°C.

The plastic container is preferably a perforated bag.

To produce the containers for the pre-baked and deep-frozen dough pieces any plastic material for food use can be used which resists the aforesaid temperature range between at least -40°C and +250°C for heating times of at least 40 minutes at +250°C, and is at least partially permeable to gases, to enable the steam generated during final bread baking to leave. A material of the aforestated type is for example that marketed under the brand name "Lumirror 10.23" of Toray Plastic Europe SA.

## Claims

1. A method for producing bread portions having weight between 20 and 200 grams, comprising: a stage in which the bread mix is prepared, a stage of splitting the mix and dividing it into a plurality of dough parts, and a stage of leavening said parts, further comprising subsequent to said stages a further stage of pre-baking said leavened parts, a subsequent stage of cooling said pre-baked parts, a subsequent stage of deep-freezing said cooled parts, and a subsequent stage of packaging predefined quantities of said deep-frozen parts in a plastic container resistant to heat and at least partially permeable to gases, **characterised in that**:
- the pre-baking stage takes place at a temperature between 100°C and 250°C, for a time between 10 and 40 minutes;
- the plastic container presents a plurality of small-dimension holes to enable the steam to escape during final bread baking.

2. A method as claimed in claim 1, **characterised in that** said predefined quantities of deep-frozen parts are baked in an oven together with the container in which they are contained, so as to complete their baking and produce the bread to be consumed.

3. A method as claimed in claim 1, **characterised in that** the pre-baked and deep-frozen product is distributed to final bread users in heat resistant plastic containers.

4. A method as claimed in claim 3, **characterised in that** the plastic containers are able to act as the sole packaging for distributing the deep-frozen product.

5. A method as claimed in claim 2, **characterised in that** the final baking stage is effected in a place different and separate from that in which the mixing, splitting, leavening, pre-baking, deep-freezing and packaging stages take place.

6. A method as claimed in claim 1, **characterised in that** the pre-baking stage comprises baking to the extent of between about 70% and 90% of the total baking necessary for producing the bread.

7. A method as claimed in claim 1, **characterised in that** the cooling takes place at ambient temperature.

8. A method as claimed in claim 1, **characterised in that** the deep-freezing is of forced rapid type.

9. A method as claimed in claim 8, **characterised in that** the deep-freezing takes place by maintaining the pre-baked and cooled dough parts at a temperature less than or equal to -35°C for a time greater than or equal to 10 minutes.

10. A method as claimed in claim 1, **characterised in that** prior to the deep-freezing stage a plurality of dough parts are disposed on a tray, a plurality of trays being loaded onto a tray-carrying trolley, said trolleys being pushed into a deep-freezing cell for the deep-freezing stage.

11. A method as claimed in claim 10, **characterised in that** the tray-carrying trolleys are made to enter the deep-freezing cell through a first opening and made to leave through a second opening to enable the trolleys to be inserted into said cell in series

12. A method as claimed in claim 1, **characterised by** packaging the predetermined quantities of deep-frozen products in bags.

13. A method as claimed in claim 1, **characterised by** storing the containers of deep-frozen dough pieces at a temperature less than or equal to -20°C.

14. Arrangement of a packaging and of bread contained therein, in which the bread is of pre-baked deep-frozen type, and the packaging comprises a plastic container resistant to heat and at least partially permeable to gases, to enable final baking of the bread to take place together with said container, **characterised in that**:
- the packaging contains bread portions having a weight between 20 and 200 grams;
- the bread is pre-baked at a temperature between 100°C and 250°C, for a time between 10 and 40 minutes;
- the plastic container presents a plurality of small-dimension holes so as to enable the steam to escape during final bread baking.

15. Packaging as claimed in claim 14, **characterised in that** the heat resistant container is able to be used as packaging for distribution to the final bread producers.

16. Packaging as claimed in claim 14, **characterised in that** the plastic containers can act as sole packaging for distributing the bread to the final producers.

17. Packaging as claimed in claim 14, **characterised in that** the plastic containers are able to be deep-frozen and to withstand a temperature less than or equal to -35°C for a time greater than or equal to 10 minutes.

18. Packaging as claimed in claim 14, **characterised in that** the plastic containers are bags.

## Patentansprüche

1. Verfahren zur Herstellung von Brotportionen, die ein Gewicht haben zwischen 20 und 200 g, enthaltend:
einen Arbeitsgang, in dem die Brotmischung zubereitet wird, einen Arbeitsgang des Teilens der Mischung und ihrer Aufteilung in eine Vielzahl von Teigstücken,
und einen Arbeitsgang des Ansäuerns der genannten Stücke, und weiter enthaltend nach den genannten Arbeitsgängen einen weiteren Arbeitsgang des Vorbackens der genannten gesäuerten Stücke, einen nachfolgenden Arbeitsgang des Kühlens der genannten vorgebackenen Stücke, einen nachfolgenden Arbeitsgang des Tiefgefrierens der genannten abgekühlten Stücke und einen nachfolgenden Arbeitsgang des Abpackens von vorbestimmten Mengen der genannten tiefgefrorenen Stücke in einen Plastikbehälter, der hitzeresistent ist und wenigstens teilweise für Gas durchlässig ist,
**dadurch gekennzeichnet,**
**dass**
- der Vorbackarbeitsgang stattfindet bei einer Temperatur zwischen 100 °C und 250 °C für eine Zeit zwischen 10 und 40 Minuten;
- der Kunststoffbehälter eine Vielzahl von Löchern mit kleinen Abmessungen aufweist, um dem Dampf zu ermöglichen, während des abschließenden Brotbackens auszutreten.

2. Ein Verfahren gemäß Anspruch 1,
**dadurch gekennzeichnet,**
**dass** die vorbestimmten Mengen an tiefgefrorenen Stücken in einem Ofen zusammen mit dem Behälter, in dem sie enthalten sind, gebacken werden, um ihr Backen abzuschließen und das Brot herzustellen, das zu konsumieren ist.

3. Ein Verfahren gemäß Anspruch 1,
**dadurch gekennzeichnet,**
**dass** das vorgebackene und tiefgefrorene Produkt an die Endbrotabnehmer vertrieben wird in hitzebeständigen Kunststoffbehältern.

4. Ein Verfahren gemäß Anspruch 3,
**dadurch gekennzeichnet,**
**dass** die Kunststoffbehälter in der Lage sind, als einzige Verpackung zu dienen für den Vertrieb des tiefgefrorenen Produktes.

5. Ein Verfahren gemäß Anspruch 2,
**dadurch gekennzeichnet,**
**dass** der Endbackarbeitsgang durchgeführt wird an einem Ort, der unterschiedlich und getrennt ist von dem, an dem die Misch-, Teil-, Ansäuerungs-, Vorback-, Tiefgefrier- und Verpackungsarbeitsgänge stattfinden.

6. Ein Verfahren gemäß Anspruch 1,
**dadurch gekennzeichnet,**
**dass** der Vorbackarbeitsgang ein Backen umfasst bis zu einem Umfang zwischen 70 % und 90 % des Gesamtbackens, das notwendig ist, um das Brot zu produzieren.

7. Ein Verfahren gemäß Anspruch 1,
**dadurch gekennzeichnet,**
**dass** das Abkühlen bei Umgebungstemperatur stattfindet.

8. Ein Verfahren gemäß Anspruch 1,
**dadurch gekennzeichnet,**
**dass** das Tiefgefrieren ein Schockfrosten ist.

9. Ein Verfahren gemäß Anspruch 8,
**dadurch gekennzeichnet,**
**dass** das Tiefgefrieren stattfindet, indem die vorgebackenen und abgekühlten Teigstücke bei Temperaturen gehalten werden von weniger oder gleich -35 °C für eine Zeit größer oder gleich 10 Minuten.

10. Ein Verfahren gemäß Anspruch 1,
**dadurch gekennzeichnet,**
**dass** vor dem Tiefgefrierarbeitsgang eine Vielzahl von Teigstücken auf einem Tablett abgelegt werden, wobei eine Vielzahl von Tabletts auf einen Tablett-Trage-Wagen geladen werden, wobei die genannten Wagen für den Tiefgefrierarbeitsgang in eine Tiefgefrierkammer geschoben werden.

11. Ein Verfahren gemäß Anspruch 10,
**dadurch gekennzeichnet,**
**dass** die Tablett-Trage-Wagen so gemacht sind, dass sie in die Tiefgefrierkammer durch eine erste Öffnung hineingelangen und so, dass sie sie durch eine zweite Öffnung verlassen, um den Wagen zu ermöglichen, in Serien in die genannten Kammern eingeführt zu werden.

12. Ein Verfahren gemäß Anspruch 1,
**dadurch gekennzeichnet,**
**dass** die vorbestimmten Mengen an tiefgefrorenen Produkten in Beutel verpackt werden.

13. Ein Verfahren gemäß Anspruch 1,
**gekennzeichnet durch** Lagern der Behälter von tiefgeforenen Teigstücken bei einer Temperatur von weniger oder gleich -20 °C.

14. Anordnung einer Verpackung und darin enthaltenes Brot,
bei dem das Brot vorgebacken und tiefgefroren ist, und wobei die Verpackung einen Kunststoffbehälter aufweist, der hitzebeständig ist und zumindest teilweise durchlässig für Gase ist, um das Endbacken des Brotes zusammen mit dem genannten Behälter zu ermöglichen,
**dadurch gekennzeichnet,**
- **dass** die Verpackung Brotportionen enthält, die ein Gewicht haben zwischen 20 und 200 g,
- **dass** das Brot vorgebacken ist bei eine Temperatur zwischen 100 °C und 250 °C für eine Zeit zwischen 10 und 40 Minuten;
- **dass** der Kunststoffbehälter eine Vielzahl von Löchern mit kleinen Abmessungen aufweist, um so dem Dampf zu ermöglichen, während des abschließenden Brotbackens auszutreten.

15. Verpackung gemäß Anspruch 14,
**dadurch gekennzeichnet,**
**dass** der hitzebeständige Behälter in der Lage ist, als Verpackung für den Vertrieb an die Brotendproduzenten zu dienen.

16. Verpackung gemäß Anspruch 14,
**dadurch gekennzeichnet,**
**dass** der Kunststoffbehälter als einzige Verpackung für den Vertrieb des Brotes an die Endproduzenten benutzt werden kann.

17. Verpackung gemäß Anspruch 14,
**dadurch gekennzeichnet,**
**dass** die Kunststoffbehälter in der Lage sind, tiefgefroren zu werden und einer Temperatur zu widerstehen, die niedriger oder gleich -35° C ist für eine Zeit größer oder gleich 10 Minuten.

18. Verpackung gemäß Anspruch 14,
**dadurch gekennzeichnet,**
**dass** die Kunststoffbehälter Beutel sind.

## Revendications

1. Procédé permettant de produire des portions de pain ayant un poids compris entre 20 et 200 grammes, comprenant : une étape au cours de la quelle le mélange pour pâte à pain est préparé, une étape consistant à partager le mélange et le diviser en une pluralité de parts de pâte, et une étape de levage desdites parts, comprenant en outre à la suite des dites étapes une étape supplémentaire de précuisson desdites parts levées, une étape supplémentaire de refroidissement desdites parts précuites, une étape supplémentaire de congélation desdites parts refroidies, et une étape supplémentaire d'emballage de quantités prédéfinies desdites parts congelées dans un contenant en plastique résistant à la chaleur et au moins partiellement perméable aux gaz, **caractérisé en ce que** :
- l'étape de précuisson est effectuée à une température comprise entre 100°C et 250°C, pour une durée comprise entre 10 et 40 minutes ;
- le contenant en plastique présente une pluralité de trous de petite dimension pour permettre à la vapeur de s'échapper pendant la cuisson finale du pain.

2. Procédé selon la revendication 1, **caractérisé en ce que** lesdites quantités prédéfinies de parts congelées sont cuites dans un four avec le contenant dans lequel elles sont contenues, de manière à compléter leur cuisson et à produire le pain devant être consommé.

3. Procédé selon la revendication 1, **caractérisé en ce que** le produit congelé et précuit est distribué aux utilisateurs de pain finaux dans des contenants en plastique résistant à la chaleur.

4. Procédé selon la revendication 3, **caractérisé en ce que** les contenants en plastique sont capables de faire office d'emballage unique pour distribuer le produit congelé.

5. Procédé selon la revendication 2, **caractérisé en ce que** l'étape finale de cuisson est effectuée dans un endroit différent et séparé de celui dans lequel les étapes de mélange, de partage, de levage, de précuisson, de congélation et d'emballage sont effectuées.

6. Procédé selon la revendication 1, **caractérisé en ce que** l'étape de précuisson comprend une cuisson jusqu'à un degré compris entre environ 70% et 90% de la cuisson totale nécessaire pour produire le pain.

7. Procédé selon la revendication 1, **caractérisé en ce que** le refroidissement est effectué à température ambiante.

8. Procédé selon la revendication 1, **caractérisé en ce que** la congélation est de type rapide forcé.

9. Procédé selon la revendication 8, **caractérisé en ce que** la congélation est effectuée en maintenant les parts de pâte précuites et refroidies à une température inférieure ou égale à -35°C pour une durée supérieure ou égale à 10 minutes.

10. Procédé selon la revendication 1, **caractérisé en ce qu'**avant l'étape de congélation une pluralité de parts de pâte est disposée sur un plateau, une pluralité de plateaux étant chargée sur un chariot porte plateaux, lesdits chariots étant poussés dans un compartiment de congélation pour l'étape de congélation.

11. Procédé selon la revendication 10, **caractérisé en ce que** les chariots porte plateaux sont conçus pour entrer dans le compartiment de congélation par une première ouverture et conçus pour sortir par une seconde ouverture pour permettre aux chariots d'être introduits dans ledit compartiment en séries.

12. Procédé selon la revendication 1, **caractérisé par** l'étape consistant à emballer les quantités prédéterminées de produits congelés dans des sacs.

13. Procédé selon la revendication 1, **caractérisé par** l'étape consistant à stocker les contenants de morceaux de pâtes congelés à une température inférieure ou égale à -20°C.

14. Agencement d'un emballage et de pain qui y est contenu, dans lequel le pain est de type précuit et congelé, et l'emballage comprend un contenant en plastique résistant à la chaleur et au moins partiellement perméable aux gaz, pour permettre à une cuisson finale du pain d'être effectuée avec ledit contenant,
**caractérisé en ce que** :
- l'emballage contient des portions de pain ayant un poids compris entre 20 et 200 grammes ;
- le pain est précuit à une température comprise entre 100°C et 250°C, pour une durée comprise entre 10 et 40 minutes ;
- le contenant en plastique présente une pluralité de trous de petite dimension afin de permettre à la vapeur de s'échapper pendant la cuisson finale du pain.

15. Emballage selon la revendication 14, **caractérisé en ce que** le contenant résistant à la chaleur est capable d'être utilisé comme emballage pour une distribution aux producteurs finaux de pain.

16. Emballage selon la revendication 14, **caractérisé en ce que** le contenant en plastique peut faire office d'emballage unique pour distribuer le pain aux producteurs finaux.

17. Emballage selon la revendication 14, **caractérisé en ce que** les contenants en plastique sont capables d'être congelés et de résister à une température inférieure ou égale à 35°C pour une durée supérieure ou égale à 10 minutes.

18. Emballage selon la revendication 14, **caractérisé en ce que** les contenants en plastique sont des sacs.
